# EUROPEAN PATENT APPLICATION

(11) **EP 4 682 998 A1**
(43) Date of publication of application: **21.01.2026**
(21) Application number: 24787804.4
(22) Date of filing: 18.02.2024
(51) Int. Cl.: H01M 4/66, H01M 4/13, H01M 4/04, H01M 10/0525, H01M 10/054

(54) **CURRENT COLLECTOR, ELECTRODE SHEET AND BATTERY**

(30) Priority: 10.04.2023 CN 202310372988
(71) Applicant: Trina Storage Solutions (Jiangsu) Co., Ltd, Changzhou, Jiangsu 213031 (CN)
(72) Inventor: WEI, Siwei, hangzhou, Jiangsu 213031 (CN); JIANG, Zhiyi, hangzhou, Jiangsu 213031 (CN); WANG, Hongming, hangzhou, Jiangsu 213031 (CN); WANG, Quan, hangzhou, Jiangsu 213031 (CN); WAN, Haicheng, hangzhou, Jiangsu 213031 (CN); HUO, Taotao, hangzhou, Jiangsu 213031 (CN)
(74) Representative: Nederlandsch Octrooibureau
(86) International application number: PCT/CN2024/077441
(87) International publication number: WO 2024/212698

(57) **Abstract**

A current collector, an electrode sheet and a battery. The current collector comprises: n non-conductive layers and n+1 conductive layers, wherein the n non-conductive layers and the n+1 conductive layers are alternately stacked, and the outermost layer is the conductive layer, n being an integer greater than 1; and each non-conductive layer comprises one non-conductive metal layer or a plurality of stacked non-conductive metal layers, and each conductive layer comprises at least one metal conductive layer. The current collector has high safety, low processing difficulty, low cost and a high yield.

## Description

### Technical Field

The present application mainly relates to the field of battery technology, and specifically to a current collector, an electrode sheet and a battery.

### Background

With the growing concern over energy shortages and environmental issues, the development and utilization of new energy sources have become increasingly urgent. As an important component of new energy, battery (such as lithium-ion battery, sodium-ion battery) has gradually matured in technology and become the electrochemical energy sources with the highest commercial value. However, with the in-depth application of battery in the fields of power and energy storage, the requirements for battery in terms of energy density, cell capacity and cell voltage have increased accordingly, and potential safety hazards have also increased.

### Summary

An objective of the present application is to provide a current collector, an electrode sheet and a battery, to improve battery safety.

To achieve the above objective, firstly, the present application provides a current collector, comprising: n non-conductive layers and n+1 conductive layers, wherein the n non-conductive layers and the n+1 conductive layers are alternately stacked, and the outermost layers are the conductive layers, where n is an integer greater than 1; wherein each non-conductive layer comprises one non-conductive metal layer or a stack of multiple layers of non-conductive metal layers; and each conductive layer comprises at least one metal conductive layer.

In one embodiment of the present application, the non-conductive metal layer comprises a base body and an insulating layer disposed on the surface of the base body.

In one embodiment of the present application, a material of the base body comprises one or more of aluminum, titanium and magnesium, and the insulating layer is an oxide layer corresponding to the material of the base body.

In one embodiment of the present application, a thickness of the non-conductive layer is in a range of 2-15 µm.

In one embodiment of the present application, the conductive layer comprises one layer of the metal conductive layer or a stack of multiple layers of the metal conductive layers.

In one embodiment of the present application, the material of the metal conductive layer comprises one or more of aluminum, titanium and magnesium.

In one embodiment of the present application, a thickness of the metal conductive layer is in a range of 2-15 µm.

To achieve the above objective, secondly, the present application provides an electrode sheet, comprising a current collector and an active material layer, the active material layer is disposed on an outer surface of the current collector, and the current collector adopts the current collector according to any one of the embodiments of the present application in the previously described.

To achieve the above objective, thirdly, the present application provides a lithium-ion battery, comprising a cathode sheet, an anode sheet, an electrolyte, a separator and a casing, wherein the separator is stacked between the cathode sheet and the anode sheet, and the cathode sheet, the anode sheet, the electrolyte and the separator are disposed within the casing, and the electrolyte infiltrates the cathode sheet, the anode sheet and the separator. The cathode sheet adopts the electrode sheet according to the embodiments of the present application in the previously described.

To achieve the above objective, fourthly, the present application provides a sodium-ion battery, comprising a cathode sheet, an anode sheet, an electrolyte, a separator and a casing, wherein the separator is stacked between the cathode sheet and the anode sheet, and the cathode sheet, the anode sheet, the electrolyte and the separator are disposed within the casing, and the electrolyte infiltrates the cathode sheet, the anode sheet and the separator. The cathode sheet and/or the anode sheet adopts the electrode sheet according to the embodiments of the present application in the previously described.

The current collector provided by the present application comprises n non-conductive layers and n+1 conductive layers which are alternately stacked, with the outermost layers being the conductive layers. Since the non-conductive layers include a non-conductive metal layer, compared with conductive metal layer, the non-conductive metal layers have higher impedance and superior thermal conductivity, which can improve the safety of the current collector. Furthermore, the conductive layers are located on the outermost surface, allowing a welding processe to be directly applied to the surface of the current collector without the need for an additional metal tab, thereby reducing the processing difficulty and cost of the current collector, while increasing the yield rate of the current collector.

### Brief Description of the Drawings

In order to make the features and advantages of the present application more obvious and understandable, the specific implementation methods of the present application will be described in detail below in conjunction with the drawings, wherein:
FIG.1 is a cross-sectional view of a current collector according to an embodiment of the present application;
FIG.2 is a cross-sectional view of another current collector according to an embodiment of the present application;
FIG.3 is a cross-sectional view of yet another current collector according to an embodiment of the present application;
FIG.4 is a schematic structural view of an electrode sheet according to an embodiment of the present application.

In the drawings:
1 - non-conductive layer;
11 - first non-conductive metal layer;
12 - second non-conductive metal layer;
13 - third non-conductive metal layer;
2 - conductive layer;
4 - current collector;
5 - active material layer.

Preferred Embodiment of the Present InventionSpecific embodiments of the present application will be described in detail below with reference to the accompanying drawings. It should be understood that the specific embodiments described herein are merely for the purpose of illustrating and explaining the present application, and are not intended to limit the present application.

The term "and/or" used in the present application encompasses any combination of one or more of the related listed items.

The terms used herein are for the purpose of describing particular embodiments only and are not intended to limit the application. As used herein, the singular forms "a", "an" and "the" are intended to include the plural forms as well, unless the context clearly indicates otherwise.

When the terms "comprise" and/or "composed of" are used herein, they specify the presence of the stated features, integers, steps, operations, elements, and/or components, but do not preclude the presence or addition of one or more other features, integers, steps, operations, elements, components, and/or groups thereof.

Embodiments of the present application may be described with reference to plan and/or cross-sectional illustrations, which are idealized schematic diagrams. Accordingly, these exemplary diagrams may be subject to variations due to manufacturing techniques and/or tolerances.

Unless otherwise limited, all terms (including technical and scientific terms) used herein have the same meaning as commonly understood by one of ordinary skill in the art to which this application belongs. It will be further understood that terms, such as those defined in commonly-used dictionaries, should be interpreted as having a meaning that is consistent with their meaning in the context of the relevant art and the present application, and will not be interpreted in an idealized or overly formal sense unless expressly limited herein.

With the in-depth application of battery in the fields of power and energy storage, the requirements for battery in terms of energy density, cell capacity and cell voltage have increased accordingly, and potential safety hazards have also increased. A typical battery comprises multiple electrode sheets, and each electrode sheet includes a current collector. The impedance of the current collector affects the safety of the battery. Although non-conductive layers made of non-metallic materials can increase the impedance of the current collector, they have poor thermal conductivity. It is necessary to arrange metal tabs at both ends of the current collector to facilitate subsequent welding processes, which increases process difficulty and manufacturing costs, and also reduces the yield rate. Therefore, an embodiment of the present application provides a current collector. By improving the structure of the current collector to adjust its impedance, the safety of the current collector is improved, and at the same time, the process difficulty and cost can be reduced.

The current collector provided by an embodiment of the present application comprises n non-conductive layers and n+1 conductive layers, where n is an integer greater than 1. The n non-conductive layers and the n+1 conductive layers are alternately stacked, and the outermost layers are the conductive layers, which means the outermost layers of the current collector are conductive.

Each non-conductive layer comprises one non-conductive metal layer or a stack of multiple non-conductive metal layers. And each conductive layer comprises at least one metal conductive layer.

The non-conductive layer includes a non-conductive metal layer. Compared with conductive metal layer, the non-conductive metal layer has higher impedance and superior thermal conductivity, which can improve the safety of the current collector. Furthermore, the conductive layer includes metal conductive layer, and is located on the outermost surface, welding processes can be directly applied to the surface of the current collector without the need for an additional metal tab, thereby reducing the processing difficulty and cost of the current collector, thereby facilitating its commercial application.

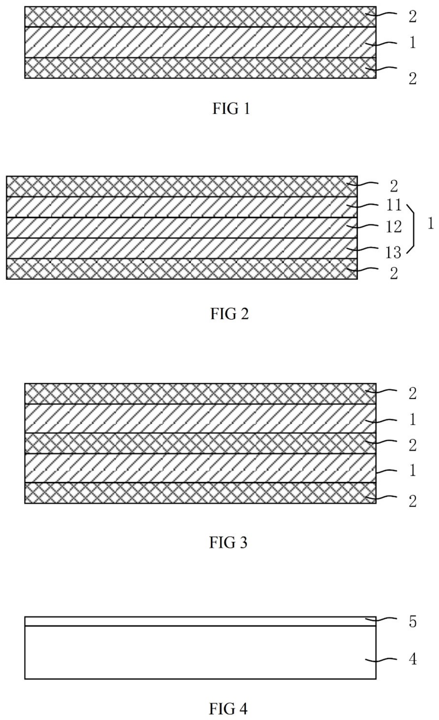

FIG.1 is a cross-sectional view of a current collector according to an embodiment of the present application. Referring to FIG.1, the current collector comprises one non-conductive layer 1 and two conductive layers 2. The one non-conductive layer 1 and the two conductive layers 2 are alternately stacked, meaning that the one non-conductive layer 1 is stacked between the two conductive layers 2.

The non-conductive layer 1 comprises at least one layer of the non-conductive metal layer, that is, the number of layers of the non-conductive metal layer can be one layer or multiple layers. When the non-conductive layer 1 comprises multiple non-conductive metal layers, these multiple non-conductive metal layers are sequentially stacked. In other words, the non-conductive layer 1 comprises either one layer of the non-conductive metal layer or a stack of multiple non-conductive metal layers.

In some embodiments, the non-conductive layer 1 comprises a base body and an insulating layer disposed on the surface of the base body. Wherein, the material of the base body comprises one or more of aluminum, titanium and magnesium, and the insulating layer is an oxide layer corresponding to the material of the base body. For example, when the material of the base body of the non-conductive layer 1 is aluminum, the insulating layer corresponding to the aluminum base body is an oxide of aluminum, such as alumina. When the material of the base body of the non-conductive layer 1 is titanium, the insulating layer corresponding to the titanium base body is an oxide of titanium, such as titania. When the material of the base body of the non-conductive layer 1 is magnesium, the insulating layer corresponding to the magnesium base body is an oxide of magnesium, such as magnesia.

When the material of the base body comprises multiple elements selected from aluminum, titanium and magnesium, a stacked base body can be obtained by stacking multiple base bodies, and then the insulating layer is formed on the surface of the stacked base body.

In the embodiment of the present application, the insulating layer on the surface of the base body can be obtained through an anodizing treatment. For example, to form the non-conductive metal layer, an aluminum base body and a magnesium base body may be stacked firstly to obtain an aluminum-magnesium stacked base body, then an oxide layer is formed on the surface of the aluminum-magnesium stacked base body via an anodizing treatment, that is, alumina is formed on the exposed surfaces of the aluminum base body, and magnesia is formed on magnesium base body. The alumina and the magnesia wrap the alternately stacked aluminum-magnesium base body. As another example, an aluminum base body, a titanium base body and a magnesium base body are sequentially stacked to form an aluminum-titanium-magnesium stacked base body, then an oxide layer is formed on the surface of the aluminum-titanium-magnesium stacked base body via an anodizing treatment, that is, alumina is formed on the exposed surfaces of the aluminum base body, titania is formed on the titanium base body, and magnesia is formed on the magnesium base body. The aluminum-titanium-magnesium stacked base body is coated with the alumina, titania and magnesia.

The embodiment of the present application does not limit the method of the anodizing treatment. Any process applicable for the anodization of metal materials can be used to anodize the base body and forms an oxide layer on the surface of the base body. For example, in an acidic electrolyte, aluminum is used as the anode for oxidation, and an aluminum oxide layer is formed on the surface of aluminum, with the aluminum oxide layer serving as the insulating layer of the aluminum body. Similarly, the anodizing processes for titanium and magnesium is the same as that for aluminum, and no further description is provided here.

In some embodiments, the thickness of the non-conductive layer 1 is in the range of 2-15 µm. For instance, the thickness of the non-conductive layer 1 can be 2 µm, 5 µm, 8 µm, 10 µm, 12 µm or 15 µm.

In some embodiments, the conductive layer 2 comprises at least one layer of the metal conductive layer, that is, the conductive layer 2 comprises one metal conductive layer or a stack of multiple metal conductive layers.

It should be noted that when the conductive layer 2 comprises multiple metal conductive layers, the stacking direction of the multiple metal conductive layers is the same as the stacking direction of the non-conductive layer 1 and the conductive layer 2. For example, the stacking direction can be the vertical direction of the paper where FIG.1 is located.

In some embodiments, the material of the metal conductive layer comprises one or more of aluminum, titanium and magnesium. For example, the metal conductive layer can be an aluminum conductive layer made of aluminum material, a titanium conductive layer made of titanium material, or a magnesium conductive layer made of magnesium material. As another example, the metal conductive layer can be an aluminum-magnesium conductive layer made from a mixture of aluminum material and magnesium material, or an aluminum-titanium-magnesium conductive layer can be made from a mixture of aluminum material, titanium material and magnesium material.

In some embodiments, the thickness of the conductive layer 2 is in the range of 2-15 µm. For example, the thickness of the conductive layer 2 can be 2 µm, 5 µm, 8 µm, 10 µm, 12 µm or 15 µm.

FIG.2 is a cross-sectional view of another current collector according to an embodiment of the present application. Referring to FIG.2, the current collector comprises one non-conductive layer 1 and two conductive layers 2. The one non-conductive layer 1 is stacked between the two conductive layers 2.

The difference between this embodiment and the embodiment of FIG.1 lies in the structure of the non-conductive layer 1. The non-conductive layer 1 comprises three non-conductive metal layers, namely, a first non-conductive metal layer 11, a second non-conductive metal layer 12 and a third non-conductive metal layer 13. Furthermore, the first non-conductive metal layer 11, the second non-conductive metal layer 12 and the third non-conductive metal layer 13 are sequentially stacked to form the non-conductive layer 1.

It should be noted that the stacking direction of the multiple non-conductive metal layers is the same as the stacking direction of the non-conductive layer 1 and the conductive layer 2. For example, the stacking direction can be the vertical direction of the paper where FIG.1 is located.

In this embodiment, except for the structure of non-conductive layer 1, the structures of conductive layer 2 and the non-conductive metal layer corresponding to non-conductive layer 1 are the same as those depicted in the embodiment of FIG.1, and no further description is provided here.

FIG.3 is a cross-sectional view of yet another current collector according to an embodiment of the present application. Referring to FIG.3, the current collector comprises two non-conductive layers 1 and three conductive layers 2. The two non-conductive layers 1 and the three conductive layers 2 are alternately stacked, and the outermost layers of the current collector are the conductive layers 2.

In this embodiment, except for the number of non-conductive layer 1 and conductive layer 2, the structure of the conductive layer 2 and the non-conductive metal layer corresponding to the non-conductive layer 1 are the same as those in the embodiment of FIG. 1, and no further description is provided here.

It should be pointed out that the quantities of the non-conductive layers 1 and conductive layers 2 in the aforementioned embodiments are merely for better understanding of the present application, but not intended to limit the present application. In practice, the current collector provided by the embodiments of the present application comprises n non-conductive layers and n+1 conductive layers, where n is an integer greater than 1.

The current collector provided by the present application comprises n non-conductive layers and the n+1 conductive layers which are alternately stacked, with the outermost layers are the conductive layers. Since the non-conductive layers include a non-conductive metal layer, compared with conductive metal layer, the non-conductive metal layers have higher impedance and superior thermal conductivity, which can improve the safety of the current collector. Furthermore, the conductive layers are located on the outermost surface, allowing a welding processe to be directly applied to the surface of the current collector without the need for an additional metal tab, thereby reducing the processing difficulty and cost of the current collector, while increasing the yield rate of the current collector.

Another embodiment of the present application provides an electrode sheet. FIG.4 is a schematic structural view of an electrode sheet according to an embodiment of the present application. Referring to FIG.4, the electrode sheet comprises a current collector 4 and an active material layer 5. The active material layer 5 is disposed on the outer surface of the current collector 4.

Wherein, the current collector 4 adopts the current collector provided in the embodiments of the present application. For the specific structure of the current collector, please refer to FIGs 1 to 3 and the corresponding text sections, which will not be repeated here.

When the current collector 4 is used in a lithium-ion battery, it can be used for the cathode. The material of the active material layer 5 comprises polyanion-type cathode materials or layered oxide cathode materials. The polyanion-type cathode materials include, but are not limited to, lithium iron phosphate (LFP), lithium manganese iron phosphate (LMFP) and lithium vanadium fluorophosphate (LVFP), etc. The layered oxide cathode materials include, but are not limited to, lithium nickel cobalt manganese oxide (NCM) and spinel-type lithium manganese oxide (LMO), etc.

When the current collector 4 is used in a sodium-ion battery, it can be used for the cathode and/or the anode. The material of the active material layer 5 includes, but is not limited to, sodium-containing layered transition metal oxides (such as NaxMO2), sodium-containing polyanion cathode materials (such as NaxMy[(XOm)n-]z), or Prussian blue, or Prussian white. The anode active material also can be hard carbon, soft carbon and silicon-based anode material, etc.

The electrode sheet provided by the embodiment of the present application adopts the current collector provided by the embodiment of the present application. The impedance of the non-conductive metal layer serves to enhance the safety of the current collector, thereby improving the safety of the electrode sheet. Furthermore, as the conductive layer is located on the outermost surface of the current collector, welding processes can be directly applied to the surface of the current collector without the need for an additional metal tab, thereby reducing the processing difficulty and cost of the current collector, while also reducing the processing difficulty and cost of the electrode sheet, thus enhancing the commercial viability of the electrode sheet.

The embodiment of the present application provides a lithium-ion battery. The lithium-ion battery comprises a cathode sheet, an anode sheet, an electrolyte, a separator and a casing, wherein the separator is stacked between the cathode sheet and the anode sheet, and the cathode sheet, the anode sheet, the electrolyte and the separator are disposed within the casing, and the electrolyte infiltrates the cathode sheet, the anode sheet and the separator. The cathode sheet adopts the electrode sheet provided by the embodiment of the present application in the previously described.

The lithium-ion battery provided by the embodiment of the present application, by adopting the electrode sheet provided in the embodiment of the present application and utilizing the high impedance characteristic of the non-conductive metal layer, improves the safety of the current collector, thus enhancing the safety of the electrode sheet and further improving the safety of the lithium-ion battery. Furthermore, as the conductive layer is located on the outermost surface, welding processes can be directly applied to the surface of the current collector without the need for an additional metal tab, thereby reducing the processing difficulty and cost of the current collector, while also reducing the processing difficulty and cost of the lithium-ion battery and increasing the yield rate of the lithium-ion battery, thus enhancing the commercial viability of the lithium-ion battery.

The embodiment of the present application provides a sodium-ion battery. The sodium-ion battery comprises a cathode sheet, an anode sheet, an electrolyte, a separator and a casing, wherein the separator is stacked between the cathode sheet and the anode sheet, and the cathode sheet, the anode sheet, the electrolyte and the separator are disposed within the casing, and the electrolyte infiltrates the cathode sheet, the anode sheet and the separator. The cathode sheet and/or the anode sheet adopts the electrode sheet provided by the embodiment of the present application in the previously described.

The sodium-ion battery provided by the embodiment of the present application, by adopting the electrode sheet provided in the embodiment of the present application and utilizing the high impedance characteristic of the non-conductive metal layer, improves the safety of the current collector, thus enhancing the safety of the electrode sheet and further improving the safety of the sodium-ion battery. Furthermore, as the conductive layer is located on the outermost surface, welding processes can be directly applied to the surface of the current collector without the need for an additional metal tab, thereby reducing the processing difficulty and cost of the current collector, while also reducing the processing difficulty and cost of the sodium-ion battery and increasing the yield rate of the sodium-ion battery, thus enhancing the commercial viability of the sodium-ion battery.

It should be noted that the term "comprises", "comprising" or any other variation thereof, is intended to signify a non-exclusive inclusion, such that a process, method, article, or apparatus that comprises a list of elements includes not only those elements but also other elements not expressly listed, or elements inherent to such process, method, article, or apparatus. Without further limitation, an element preceded by "comprises a..." does not preclude the existence of additional identical elements in the process, method, article, or apparatus that comprises the element.

Persons skilled in the art will understand that, while some embodiments described herein include some but not all features of other embodiments, combinations of features from different embodiments are intended to be within the scope of the present application and to constitute different embodiments.

It should be understood that the foregoing embodiments are merely exemplary \embodiments adopted to illustrate the principles of the present application, however, the present invention is not limited thereto. Those of ordinary skill in the art may make various modifications and improvements without departing from the spirit and essence of the present application, and such modifications and improvements are also deemed to fall within the protection scope of the present application.

## Claims

1. A current collector, **characterized by** comprising:
n non-conductive layers and n+1 conductive layers, wherein the n non-conductive layers and the n+1 conductive layers are alternately stacked, and the outermost layers are the conductive layers, where n is an integer greater than 1;
wherein each non-conductive layer comprises one non-conductive metal layer or a stack of multiple layers of non-conductive metal layers; and each conductive layer comprises at least one metal conductive layer.

2. The current collector according to claim 1, **characterized in that** the non-conductive metal layer comprises a base body and an insulating layer disposed on the surface of the base body.

3. The current collector according to claim 2, **characterized in that** a material of the base body comprises one or more of aluminum, titanium and magnesium, and the insulating layer is an oxide layer corresponding to the material of the base body.

4. The current collector according to any one of claims 1 to 3, **characterized in that** a thickness of the non-conductive layer is in a range of 2-15 µm.

5. The current collector according to claim 1, **characterized in that** the conductive layer comprises one layer of the metal conductive layer or a stack of multiple layers of the metal conductive layers.

6. The current collector according to claim 5, **characterized in that** a material of the metal conductive layer comprises one or more of aluminum, titanium and magnesium.

7. The current collector according to claim 5 or 6, **characterized in that** a thickness of the metal conductive layer is in a range of 2-15 µm.

8. An electrode sheet, **characterized by** comprising a current collector and an active material layer, the active material layer disposed on an outer surface of the current collector, wherein the current collector adopts the current collector according to any one of claims 1 to 7.

9. A lithium-ion battery, **characterized by** comprising a cathode sheet, an anode sheet, an electrolyte, a separator and a casing, wherein the separator is stacked between the cathode sheet and the anode sheet, and
the cathode sheet, the anode sheet, the electrolyte and the separator are disposed within the casing, and the electrolyte infiltrates the cathode sheet, the anode sheet and the separator;
wherein the cathode sheet adopts the electrode sheet according to claim 8.

10. A sodium-ion battery, **characterized by** comprising a cathode sheet, an anode sheet, an electrolyte, a separator and a casing, wherein the separator is stacked between the cathode sheet and the anode sheet, and
the cathode sheet, the anode sheet, the electrolyte and the separator are disposed within the casing, and the electrolyte infiltrates the cathode sheet, the anode sheet and the separator;
wherein the cathode sheet and/or the anode sheet adopts the electrode sheet according to claim 8.
